# EUROPÄISCHE PATENTSCHRIFT

(11) **EP 3 544 920 B1**
(45) Veröffentlichungstag und Bekanntmachung des Hinweises auf die Patenterteilung: **12.10.2022**
(21) Anmeldenummer: 17793979.0
(22) Anmeldetag: 09.11.2017
(51) Int. Cl.: B66B 19/00

(54) **VERFAHREN ZUR MONTAGE UND AUSRICHTVORRICHTUNG ZUR AUSRICHTUNG EINER FÜHRUNGSSCHIENE EINER AUFZUGANLAGE**
METHOD FOR INSTALLATION AND ALIGNMENT APPARATUS FOR ALIGNMENT OF A GUIDE RAIL OF A LIFT SYSTEM
PROCÉDÉ DE MONTAGE ET DISPOSITIF D'ALIGNEMENT D'UN RAIL DE GUIDAGE D'UN ASCENSEUR

(30) Priorität: 24.11.2016 EP 16200415
(43) Veröffentlichungstag der Anmeldung: 02.10.2019
(73) Patentinhaber: INVENTIO AG, 6052 Hergiswil (CH)
(72) Erfinder: CAMBRUZZI, Andrea, 8057 Zürich (CH); BÜTLER, Erich, 6030 Ebikon (CH); ZIMMERLI, Philipp, 4624 Härkingen (CH); BITZI, Raphael, 6003 Luzern (CH); RENNER, Philipp, 6344 Meierskappel (CH)
(74) Vertreter: Inventio AG
(86) Internationale Anmeldenummer: PCT/EP2017/078746
(87) Internationale Veröffentlichungsnummer: WO 2018/095739

(56) Entgegenhaltungen:
- JP-A- H0 624 667
- JP-A- H1 087 225
- JP-A- S53 119 542

## Beschreibung

Die Erfindung betrifft ein Verfahren zur Montage einer Führungsschiene in einem hauptsächlich in einer Haupterstreckungsrichtung verlaufenden Aufzugschacht einer Aufzuganlage gemäss Anspruch 1 und eine Ausrichtvorrichtung zur Ausrichtung einer Führungsschiene in einem hauptsächlich in einer Haupterstreckungsrichtung verlaufenden Aufzugschacht einer Aufzuganlage gemäss Anspruch 10.

Aufzugkabinen und gegebenenfalls zugehörige Gegengewichte einer Aufzuganlage werden im Betrieb, also bei Fahrten in einem Aufzugschacht durch so genannte Führungsschienen geführt. Die Führungsschienen werden üblicherweise mittels eines Schienenbügelunterteils, eines Schienenbügeloberteils und sogenannten Schienenclips an einer Schachtwand des Aufzugschachts fixiert. Dazu wird üblicherweise zunächst das Schienenbügelunterteil an der Schachtwand beispielsweise mittels Schrauben fixiert und die Führungsschiene mittels der Schienenclips am Schienenbügeloberteil befestigt. Anschliessend wird die Führungsschiene ausgerichtet und das Schienenbügelunterteil mit dem Schienenbügeloberteil in der sich durch die Ausrichtung ergebenden Positionierung zueinander fest verschraubt.

Die korrekte Montage und insbesondere die exakte Ausrichtung der Führungsschienen ist für den Fahrkomfort der Aufzugkabinen sehr wichtig. Unter der Ausrichtung einer Führungsschiene soll in diesem Zusammenhang sowohl die korrekte Position im Aufzugschacht, als auch die Position gegenüber eventuell angrenzenden Führungsschienen verstanden werden. Die exakte Ausrichtung von Führungsschienen ist auch insbesondere deshalb wichtig, weil sie nach erfolgter Fixierung aller notwendigen Führungsschienen einer Aufzuganlage, wenn überhaupt, nur noch unter sehr grossem Aufwand korrigiert werden kann.

Bei der Montage der Führungsschienen wird meist zunächst eine Führungsschiene komplett inklusive Ausrichtung montiert und anschliessend mit der Montage der folgenden Führungsschiene begonnen. Um die Führungsschienen ausrichten zu können, werden meist Referenzelemente beispielsweise in Form von Richtschnüren im Aufzugschacht gespannt, gegenüber denen die Führungsschienen ausgerichtet werden müssen. Ein derartiges Verfahren ist beispielsweise in der WO 2015/091419 A1 beschrieben. Damit können die Führungsschienen genau ausgerichtet werden. Allerdings ist die Montage und die Ausrichtung recht zeitaufwändig, da häufig unterschiedliche Arbeitsschritte unter Verwendung verschiedener Werkzeuge durchgeführt werden müssen. Ausserdem können die Referenzelemente einen erheblichen Abstand zur Führungsschiene aufweisen, der aufwändig überbrückt werden muss.

Für eine rationelle Montage von Führungsschienen kann es vorteilhaft sein, wenn nicht die Führungsschienen nacheinander komplett montiert werden, sondern beispielsweise zunächst nur alle notwendigen Schienenbügelunterteile an den Schachtwänden fixiert und anschliessend erst die Führungsschienen nacheinander ausgerichtet und montiert werden. Dies ist insbesondere dann der Fall, wenn die Fixierung der Schienenbügelunterteile zumindest teilautomatisiert, beispielsweise mit Hilfe einer Montagevorrichtung gemäss der nicht vorveröffentlichten WO 2017/016783 A1 erfolgt.

Die im Aufzugschacht gespannten Referenzelemente können bei der Montage der Führungsschienen stören. Ausserdem besteht die Gefahr, dass während der Montage der Führungsschienen die Position der Referenzelemente verändert wird und es so zu einer fehlerhaften Ausrichtung der Führungsschienen und damit in letzter Konsequenz zu einem schlechten Fahrkomfort und höherem Verschleiss an der Aufzugkabine kommt.

Die JPH 0624667 A beschreibt ein Verfahren und eine Ausrichtvorrichtung zur Ausrichtung einer Führungsschiene einer Aufzuganlage, bei welchen die Führungsschiene gegenüber im Aufzugschacht gespannten Referenzelemente ausgerichtet wird.

Die JPS 53119542 A beschreibt ein Verfahren und eine Ausrichtvorrichtung zur Ausrichtung einer Führungsschiene einer Aufzuganlage, bei welchen die Führungsschiene gegenüber einem Laserstrahl ausgerichtet wird.

Demgegenüber ist es insbesondere die Aufgabe der Erfindung, ein Verfahren und eine Ausrichtvorrichtung vorzuschlagen, welche eine rationelle und dennoch genaue Montage bzw. Ausrichtung von Führungsschienen in einem Aufzugschacht ermöglichen.

Erfindungsgemäss wird diese Aufgabe mit einem Verfahren mit den Merkmalen des Anspruchs 1 und einer Ausrichtvorrichtung mit den Merkmalen des Anspruchs 12 gelöst.

Beim erfindungsgemässen Verfahren zur Montage einer Führungsschiene in einem hauptsächlich in einer Haupterstreckungsrichtung verlaufenden Aufzugschacht einer Aufzuganlage werden wenigstens die Schritte Fixieren eines Schienenbügelunterteils an einer Schachtwand des Aufzugschachts, Anbringen einer Markierung am Schienenbügelunterteil, Ausrichten der Führungsschiene gegenüber der genannten Markierung und Fixieren der Führungsschiene über das Schienenbügelunterteil an der Schachtwand ausgeführt. Diese Fixierung erfolgt beispielsweise durch ein Verschrauben des Schienenbügelunterteils mit einem Schienenbügeloberteil, an dem die Führungsschiene mittels Schienenclips befestigt ist. Durch das Anbringen der genannten Markierung, gegenüber der die Führungsschiene ausgerichtet wird, sind bei der Ausrichtung der Führungsschiene keine im Aufzugschacht gespannten Referenzelemente notwendig. Damit ist während des Ausrichtens mehr Platz im Aufzugschacht vorhanden und es besteht keine Gefahr, dass die Position der Referenzelemente ungewollt verändert wird. Darüber hinaus weisen die Markierungen, gegenüber denen die Ausrichtung der Führungsschienen keinen grossen Abstand zur Führungsschiene auf. Alle für die Ausrichtung notwendigen Elemente sind damit räumlich eng zueinander angeordnet, womit ein einfaches Handling ermöglicht wird.

Unter der Haupterstreckungsrichtung des Aufzugschachts soll hier die Richtung verstanden werden, in der eine Aufzugkabine der fertig montierten Aufzuganlage verfahren wird. Die Haupterstreckungsrichtung verläuft also insbesondere vertikal, sie kann aber auch gegenüber der Vertikalen geneigt oder horizontal verlaufen. Die Haupterstreckungsrichtung muss dabei nicht zwingend über die gesamte Länge des Aufzugschachts entlang einer einzigen Gerade verlaufen. Es ist beispielsweise auch möglich, dass sich der Verlauf der Haupterstreckungsrichtung aus Geradenstücken zusammensetzt, deren Übergangsbereiche auch ausgerundet sein können.

Die Markierung am Schienenbügelunterteil markiert insbesondere eine Position quer zur Haupterstreckungsrichtung des Aufzugschachts. Damit weist das Schienenbügelunterteil zumindest eine Komponente auf, die sich von der Schachtwand weg in den Aufzugschacht hinein erstreckt.

Das Schienenbügelunterteil wird beispielsweise mittels Schrauben oder so genannten Ankerbolzen an der Schachtwand fixiert. Das Schienenbügeloberteil ist mit dem Schienenbügelunterteil verbunden, beispielsweise verschraubt. Die Verbindung, also insbesondere die Verschraubung ist dabei so ausgeführt, dass die beiden Schienenbügelteile in unterschiedlichen Ausrichtungen, insbesondere quer zur Haupterstreckungsrichtung, zueinander verbunden werden können. Durch die genannten unterschiedlichen Ausrichtungen der beiden Schienenbügelteile wird die Ausrichtung der Führungsschiene ermöglicht. Die Bezeichnungen Schienenbügelunterteil und Schienenbügeloberteil sollen keine Orientierung der beiden Teile zueinander zum Ausdruck bringen. Die Bezeichnungen sollen lediglich eine eindeutige Unterscheidung zwischen den beiden Teilen sicherstellen.

Die Fixierung der Führungsschiene kann auch mittels anderer Bauteile erfolgen. Damit das erfindungsgemässe Verfahren durchgeführt werden kann, ist es nur relevant, dass ein Schienenbügelunterteil an einer Schachtwand fixiert wird und die Position der Führungsschiene gegenüber dem Schienenbügelunterteil verändert werden kann.

Die Markierung am Schienenbügelunterteil kann beispielsweise mit einem Stift, einer Reissnadel, einem Bohrer, einem Fräser, einem leistungsstarken Laser oder mittels eines Elektrogravurwerkzeugs angebracht werden.

Mittels der Markierung werden insbesondere zwei voneinander beabstandete Punkte markiert, wobei die beiden Punkte insbesondere einen Abstand quer zur Haupterstreckungsrichtung des Aufzugschachts aufweisen. Eine Verbindungslinie zwischen den beiden Punkten verläuft insbesondere hauptsächlich parallel zur Schachtwand, an der das Schienenbügelunterteil fixiert ist. Damit wird eine besonders genaue Ausrichtung der Führungsschiene ermöglicht.

Die Markierung kann beispielsweise aus zwei separaten Punkten oder Kreuzen bestehen. Es ist auch möglich, dass die Markierung als eine Line ausgeführt ist, deren Enden die genannten beiden Punkte kennzeichnen. Dabei ist es auch möglich, dass an den genannten Enden zusätzliche Markierungselemente, wie beispielsweise weitere Linien angeordnet sind. Darüber hinaus sind auch Mischformen der genannten Ausführungen und andere, vom Fachmann als sinnvoll erachtete Markierungen denkbar.

Das Ausrichten der Führungsschiene gegenüber der Markierung am Schienenbügelunterteil erfolgt insbesondere mittels einer Ausrichtvorrichtung, welche dazu eingerichtet ist, die Führungsschiene gegenüber einer Markierung an einem an einer Schachtwand des Aufzugschachts fixierten Schienenbügelunterteil auszurichten. Die Ausrichtvorrichtung verfügt insbesondere über ein Anlageteil mit einer Ausnehmung, welche eine komplementäre Form einer Lauffläche der Führungsschiene aufweist. Die Ausrichtvorrichtung weist ausserdem insbesondere eine Peilvorrichtung auf, welche so ausgeführt und angeordnet ist, dass das Anlageteil und damit die Führungsschiene in eine definierte Position gegenüber einer Markierung auf einem an einer Schachtwand des Aufzugschachts fixierten Schienenbügelunterteil gebracht werden kann. Damit wird eine besonders genaue und gleichzeitig einfache Ausrichtung der Führungsschiene ermöglicht.

Die Peilvorrichtung der Ausrichtvorrichtung weist insbesondere wenigstens einen Laser auf. Die Positionierung des Anlageteils gegenüber der genannten Markierung und damit die Ausrichtung der Führungsschiene erfolgt dabei so, dass ein Laserstrahl des Lasers auf die Markierung am Schienenbügelunterteil ausgerichtet wird. Damit wird eine besonders genaue und gleichzeitig einfache Ausrichtung der Führungsschiene ermöglicht. Die Peilvorrichtung weist insbesondere zwei Laser auf, so dass zur Positionierung des Anlageteils der Laserstrahl des ersten Lasers auf einen ersten Punkt und der Laserstrahl des zweiten Lasers auf einen zweiten Punkt der Markierung auf dem Schienenbügelunterteil ausgerichtet wird.

Die Peilvorrichtung kann auch einen oder zwei Peilstäbe aufweisen, die analog zu den genannten Laserstrahlen verlaufen. Die die Ausrichtung der Führungsschiene erfolgt dann so, dass eine Spitze eines Peilstabs oder die Spitzen zweier Peilstäbe auf die Markierung am Schienenbügelunterteil ausgerichtet werden.

In Ausgestaltung der Erfindung wird eine Position der Markierung auf Basis wenigstens eines, insbesondere zwei im Aufzugschacht angeordneten Referenzelemente bestimmt. Die Referenzelemente sind insbesondere als Schnüre ausgeführt, die hauptsächlich in Haupterstreckungsrichtung im Aufzugschacht gespannt sind. Durch das Anbringen der Markierungen an den Schienenbügelunterteilen auf Basis der Referenzelemente wird quasi die Position der Referenzelemente im Aufzugschacht auf die Schienenbügelunterteile übertragen. Damit können die Referenzelemente nach der Fixierung der Schienenbügelunterteile an der Schachtwand entfernt werden. Die Position der Markierung gegenüber dem oder den Referenzelementen kann beispielsweise mittels einer geeigneten Schablone bestimmt werden.

In Ausgestaltung der Erfindung wird die Markierung mittels einer mechatronischen Installationskomponente einer Montagevorrichtung zur Durchführung eines Installationsvorgangs in einem Aufzugschacht am Schienenbügelunterteil angebracht. Die Installationskomponente ist dabei insbesondere so ausgeführt, dass sie auch andere Montageschritte im Aufzugschacht, wie beispielsweise die Fixierung der Schienenbügelunterteile an der Schachtwand ausführen kann. Bei der Ausführung eines Montageschritts in einem Aufzugschacht muss eine Montagevorrichtung ihre Position im Aufzugschacht genau kennen. Sie kann die Position beispielsweise wie oben beschrieben auf Basis eines digitalen Modells des Aufzugschachts bzw. der Aufzuganlage oder auch auf Basis eines oder mehrerer Referenzelemente im Aufzugschacht bestimmen. Ein Verfahren zur Bestimmung der Position auf Basis eines oder mehrerer Referenzelemente ist beispielsweise in der nicht vorveröffentlichten europäischen Patentanmeldung der Anmelderin mit dem Aktenzeichen EP16163399.5 beschrieben. Ausgehend von der bekannten Position der Montagevorrichtung im Aufzugschacht und einer Vorgabe des gewünschten Verlaufs der Führungsschienen kann auf einfache Weise die Position der Markierung auf den Schienenbügelunterteilen bestimmt und die Markierung angebracht werden. Damit ist das Anbringen der Markierung und somit auch die Ausrichtung und Montage der Führungsschienen besonders einfach und auch kostengünstig durchführbar.

In Ausgestaltung der Erfindung werden zwei gegenüberliegende Führungsschienen ausgerichtet. Die beiden gegenüberliegenden Führungsschienen können insbesondere gleichzeitig ausgerichtet werden. Es ist auch möglich, dass zuerst eine der beiden Führungsschienen ausgerichtet wird und anschliessend die zweite, gegenüberliegende Führungsschiene. Mit der Ausrichtung der zweiten Führungsschiene kann insbesondere die Ausrichtung der ersten Führungsschiene überprüft und gegebenenfalls korrigiert werden. Die zweite, gegenüberliegende Führungsschiene wird aber stets vor einer weiteren, an die erste Führungsschiene anschliessende Führungsschiene ausgerichtet. Dabei wird jede Führungsschiene jeweils gegenüber der Markierung am ihr zugeordneten Schienenbügelunterteil ausgerichtet. Eine Aufzugkabine wird üblicherweise im Betrieb an zwei gegenüberliegenden Führungsschienen geführt. Damit ist der Fahrkomfort von der Ausrichtung beider Führungsschienen und insbesondere auch von der Ausrichtung der Führungsschienen zueinander abhängig. Durch die beschriebene Ausrichtung zweier gegenüberliegender Führungsschienen kann auch eine exakte Ausrichtung der Führungsschienen zueinander ermöglicht werden.

Die Ausrichtung zweier gegenüberliegenden Führungsschienen gegenüber der Markierung am der jeweiligen Führungsschiene zugeordneten Schienenbügelunterteil erfolgt insbesondere mittels jeweils einer Ausrichtvorrichtung, welche mittels einer Schnur verbunden sind. Zur Sicherstellung der korrekten Ausrichtung der beiden Führungsschienen zueinander wird ein korrekter Verlauf der genannten Schnur geprüft. Dazu können eine oder beide Ausrichtvorrichtungen eine langestreckte Prüfmarkierung, beispielsweise in Form einer Nut oder eines Schlitzes aufweisen, über der die Schnur bei korrekter Ausrichtung der beiden Führungsschienen zueinander verlaufen muss. Damit ist eine Prüfung der korrekten Ausrichtung der beiden Führungsschienen zueinander besonders einfach und sicher möglich.

In Ausgestaltung der Erfindung wird ein Abstand der beiden gegenüberliegenden Führungsschienen insbesondere quer zur Haupterstreckungsrichtung des Aufzugschachts überprüft. Um die Aufzugkabine korrekt führen zu können, müssen die Führungsschienen einen vorgegebenen Abstand aufweisen. Durch die Prüfung dieses Abstands wird ein guter Fahrkomfort der Aufzugkabine ermöglicht.

Die Überprüfung des genannten Abstands kann beispielsweise mittels einer so genannten Spurlehre erfolgen. Die Spurlehre ist ein Stab, mit einer definierten Länge, die dem gewünschten Abstand der Führungsschienen entspricht.

Die oben genannte Aufgabe wird auch durch eine Ausrichtvorrichtung zur Ausrichtung einer Führungsschiene in einem hauptsächlich in einer Haupterstreckungsrichtung verlaufenden Aufzugschacht einer Aufzuganlage gelöst, welche dazu eingerichtet ist, die Führungsschiene gegenüber einer Markierung an einem an einer Schachtwand des Aufzugschachts fixierten Schienenbügelunterteil auszurichten. Die Ausrichtvorrichtung weist insbesondere ein Anlageteil und eine Peilvorrichtung auf. Die Ausrichtvorrichtung ermöglicht eine besonders genaue und einfache Ausrichtung der Führungsschiene.

Das Anlageteil verfügt über eine Ausnehmung, welche eine komplementäre Form einer Lauffläche der Führungsschiene aufweist.

Eine Führungsschiene weist insbesondere einen Fuss und einen Steg auf, die T-förmig zueinander angeordnet sind. Die Führungsschiene ist so im Aufzugschacht angeordnet, dass der Fuss der Führungsschiene zumindest mittelbar am Schienenträgeroberteil anliegt, also Richtung Schachtwand orientiert ist. Der Steg ist damit in Richtung Aufzugschacht orientiert. Er weist eine bearbeitete Lauffläche der Führungsschiene auf, die aus insgesamt drei Teil-Laufflächen zusammengesetzt ist. Sie besteht aus einer stirnseitigen Teil-Lauffläche, die hauptsächlich parallel zur Schachtwand verläuft, und zwei sich an die stirnseitige Teil-Lauffläche anschliessenden seitlichen Teil-Laufflächen. Die komplementäre Form der Ausnehmung des Anlageteils der Ausrichtvorrichtung bezieht sich dabei auf eine Ebene quer zur Haupterstreckungsrichtung des Aufzugschachts. Die Ausnehmung muss dabei nicht so ausgeführt sein, dass sie alle drei Teil-Laufflächen komplett aufnehmen kann. Es ist insbesondere wichtig, dass die Ausnehmung so ausgeführt ist, dass das Anlageteil so gegenüber der Führungsschiene angeordnet werden kann, dass die Führungsschiene durch die Ausnehmung verläuft und das Anlageteil an der kompletten stirnseitigen Teil-Lauffläche und zumindest an Teilen der seitlichen Teil-Laufflächen anliegt und so eine definierte Position des Anlageteils und damit der Ausrichtvorrichtung gegenüber der Lauffläche der Führungsschiene und damit gegenüber der gesamten Führungsschiene gegeben ist.

Die Peilvorrichtung ist so ausgeführt und angeordnet, dass das Anlageteil in eine definierte Position gegenüber einer Markierung auf einem an einer Schachtwand des Aufzugschachts fixierten Schienenbügelunterteil gebracht werden kann. Dazu weist die Peilvorrichtung insbesondere wenigstens einen oder zwei Laser auf. Der oder die Laser sind dabei so an der Peilvorrichtung angeordnet, dass die Führungsschiene dann korrekt ausgerichtet ist, wenn ein vom Laser ausgesandter Laserstrahl in einer vorgegebenen Weise bezüglich der Markierung am Schienenbügelunterteil ausgerichtet ist. Die Ausrichtung ist insbesondere dann korrekt, wenn die Laserstrahlen zweier Laser genau auf zwei voneinander beabstandete Punkte der Markierung auf dem Schienenbügelunterteil ausgerichtet sind. Dies ist besonders einfach kontrollierbar, womit eine besonders einfache und gleichzeitig genaue Ausrichtung der Führungsschienen ermöglicht wird.

Statt einem oder zwei Lasern kann die Peilvorrichtung insbesondere auch einen oder zwei Peilstäbe aufweisen, die analog zu den genannten Laserstrahlen verlaufen. Die Peilstäbe können beispielsweise als Metall- oder Kunststoffstifte mit einer Spitze ausgeführt sein. Die die Ausrichtung der Führungsschiene erfolgt dann so, dass die Spitze eines Peilstabs oder die Spitzen zweier Peilstäbe auf die Markierung am Schienenbügelunterteil ausgerichtet werden. Zur genauen Positionierung kann beispielsweise die Peilvorrichtung entlang der Führungsschiene verschoben werden. Es ist auch möglich, dass die Peilstäbe hauptsächlich entlang der Haupterstreckungsrichtung des Aufzugschachts gegenüber der Peilvorrichtung verschoben werden kann. Die Peilvorrichtung ist damit besonders genau und benötigt auch keine Energiequelle, beispielsweise in Form einer Batterie. Sie ist auch sehr robust ausgeführt, was bei Verwendung auf einer Baustelle sehr vorteilhaft ist.

In Ausgestaltung der Erfindung ist die Anordnung des Anlageteils bezüglich der Peilvorrichtung einstellbar. Damit kann die Ausrichtvorrichtung an verschiedene Gegebenheiten angepasst werden und ist somit universell einsetzbar. Es kann dabei insbesondere ein Abstand der Ausnehmung des Anlageteils und der Peilvorrichtung in einer Richtung hauptsächlich senkrecht zur Anlagefläche für die stirnseitige Teil-Lauffläche der Führungsschiene des Anlageteils einstellbar sein. Der hier notwendige Abstand kann bei verschiedenen Aufzuganlagen unterschiedlich sein.

In Ausgestaltung der Erfindung weist die Ausrichtvorrichtung eine langgestreckte Prüfmarkierung auf. Die Prüfmarkierung ist so ausgeführt, dass ein korrekter Verlauf einer an der Ausrichtvorrichtung befestigten Schnur geprüft werden kann. Wenn die Ausrichtvorrichtung im Aufzugschacht an der Führungsschiene korrekt anliegt, verläuft die Prüfmarkierung insbesondere hauptsächlich senkrecht zur Schachtwand. Die Schnur verbindet insbesondere zwei Ausrichtvorrichtungen bei der gleichzeitigen Ausrichtung zweier gegenüberliegenden Führungsschienen. Damit kann auf einfache und effektive Weise die Ausrichtung zweier gegenüberliegenden Führungsschienen überprüft werden.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine perspektivische Ansicht eines Aufzugschachts einer Aufzuganlage mit einer darin aufgenommenen Montagevorrichtung,
- Fig. 2: eine perspektivische Ansicht einer Montagevorrichtung,
- Fig. 3: eine an einer Führungsschiene angeordnete Ausrichtvorrichtung in einer Seitenansicht,
- Fig. 4: die Anordnung aus Fig. 3 in einer Sicht von oben und
- Fig. 5: eine an einer Führungsschiene angeordnete alternative Ausrichtvorrichtung in einer Seitenansicht.

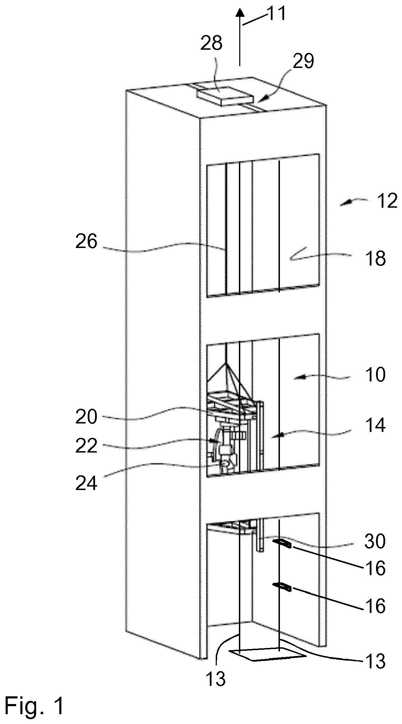

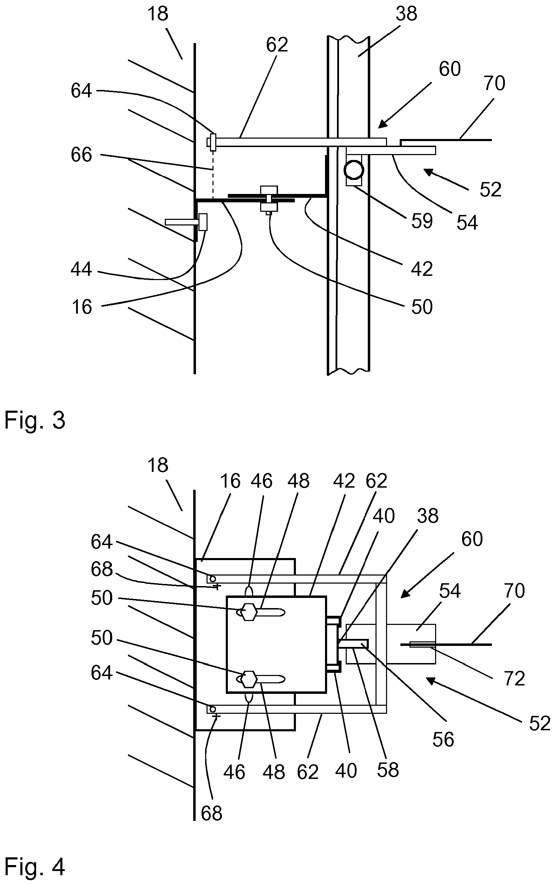

In Fig. 1 ist eine in einem Aufzugschacht 10 einer Aufzuganlage 12 angeordnete Montagevorrichtung 14 dargestellt, mittels welcher Schienenbügelunterteile 16 an einer Schachtwand 18 fixiert werden können. Der Aufzugschacht 10 erstreckt sich in einer Haupterstreckungsrichtung 11, die in der Fig. 1 vertikal ausgerichtet ist. Über die Schienenbügelunterteile 16 können in einem späteren Montageschritt in Fig. 1 nicht dargestellte Führungsschienen (38 in Fig. 3 und 4) der Aufzuganlage 12 an der Schachtwand 18 fixiert werden. Die Montagevorrichtung 14 weist eine Trägerkomponente 20 und eine mechatronische Installationskomponente 22 auf. Die Trägerkomponente 20 ist als Gestell ausgeführt, an dem die mechatronische Installationskomponente 22 montiert ist. Dieses Gestell weist Abmessungen auf, die ermöglichen, die Trägerkomponente 20 innerhalb des Aufzugschachts 10 vertikal zu verlagern, das heisst beispielsweise zu unterschiedlichen vertikalen Positionen an verschiedenen Stockwerken innerhalb eines Gebäudes zu verfahren. Die mechatronische Installationskomponente 22 ist im dargestellten Beispiel als Industrieroboter 24 ausgeführt, der nach unten hängend an dem Gestell der Trägerkomponente 20 angebracht ist. Ein Arm des Industrieroboters 24 kann dabei relativ zu der Trägerkomponente 20 bewegt werden und beispielsweise hin zur Schachtwand 18 des Aufzugschachts 10 verlagert werden.

Die Trägerkomponente 20 ist über ein als Tragmittel 26 dienendes Stahlseil mit einer Verlagerungskomponente 28 in Form einer motorisch angetriebenen Seilwinde verbunden, welche oben an dem Aufzugschacht 10 an einer Haltestelle 29 an der Decke des Aufzugschachts 10 angebracht ist. Mithilfe der Verlagerungskomponente 28 kann die Montagevorrichtung 14 innerhalb des Aufzugschachts 10 in Haupterstreckungsrichtung 11 des Aufzugschachts 10, also vertikal über eine gesamte Länge des Aufzugschachts 10 hin verlagert werden.

Die Montagevorrichtung 14 weist ferner eine Fixierkomponente 30 auf, mithilfe derer die Trägerkomponente 20 innerhalb des Aufzugschachts 10 in seitlicher Richtung, das heisst in horizontaler Richtung, fixiert werden kann.

Im Aufzugschacht 10 sind über dessen gesamte Länge zwei Referenzelemente 13 in Form von Schnüren gespannt, die entlang der Haupterstreckungsrichtung 11 ausgerichtet sind. Die Referenzelemente 13 werden von einem Monteur im Aufzugschacht 10 angebracht und bilden die Referenz für die Ausrichtung und Montage von Führungsschienen der Aufzuganlage 12. Die Führungsschienen müssen damit in montiertem Zustand parallel zu den Referenzelementen 13 und in einem bestimmten Abstand zu den Referenzelementen 13 verlaufen.

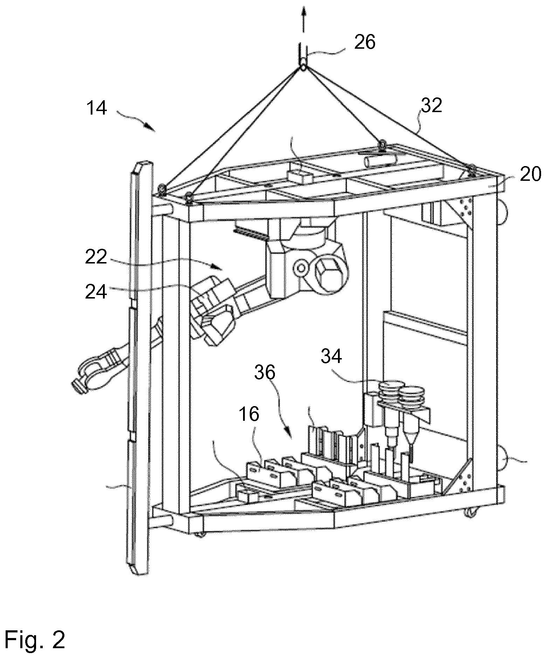

Fig. 2 zeigt eine vergrößerte Ansicht einer Montagevorrichtung 14.

Die Trägerkomponente 20 ist als käfigartiges Gestell ausgebildet, bei dem mehrere horizontal und vertikal verlaufende Holme eine mechanisch belastbare Struktur bilden.

Oben an der käfigartigen Trägerkomponente 20 sind Halteseile 32 angebracht, welche mit dem Tragmittel 26 verbunden werden können.

In der dargestellten Ausführungsform ist die mechatronische Installationskomponente 22 mithilfe eines Industrieroboters 24 ausgeführt. In dem dargestellten Beispiel ist der Industrieroboter 24 mit mehreren um Schwenkachsen verschwenkbaren Roboterarmen ausgestattet. Beispielsweise kann der Industrieroboter mindestens sechs Freiheitsgrade aufweisen, das heisst, ein von dem Industrieroboter 24 geführtes Montagewerkzeug 34 kann mit sechs Freiheitsgraden bewegt werden, das heisst beispielsweise mit drei Rotationsfreiheitsgraden und drei Translationsfreiheitsgraden. Beispielsweise kann der Industrieroboter als Vertikal-Knickarmroboter, als Horizontal-Knickarmroboter oder als SCARA-Roboter oder als kartesischer Roboter bzw. Portalroboter ausgeführt sein.

Der Roboter kann an seinem freitragenden Ende mit verschiedenen Montagewerkzeugen 34 gekoppelt werden. Die Montagewerkzeuge 34 können sich hinsichtlich ihrer Auslegung und ihres Einsatzzweckes unterscheiden. Die Montagewerkzeuge 34 können an der Trägerkomponente 20 derart gehalten werden, dass das freitragende Ende des Industrieroboters 24 an sie herangefahren werden und mit einem von ihnen gekoppelt werden kann. Der Industrieroboter 24 kann hierzu beispielsweise über ein Werkzeugwechselsystem verfügen, das so ausgebildet ist, dass es mindestens die Handhabung mehrerer solcher Montagewerkzeuge 34 ermöglicht.

Eines der Montagewerkzeuge 34 ist als Sensor, beispielsweise als Laserscanner ausgeführt, mittels welchem die relative Lage der Trägerkomponente 20 gegenüber den Referenzelementen 13 bestimmt werden kann. Dies kann beispielsweise mit einem Verfahren durchgeführt werden, das in der nicht vorveröffentlichten europäischen Patentanmeldung der Anmelderin mit der Anmeldenummer EP16163399.5 beschrieben ist. Aus der relativen Lage der Trägerkomponente 20 gegenüber den Referenzelementen 13 kann die Position der Trägerkomponente 20 im Aufzugschacht 10 ermittelt werden. Ausgehend von der Position der Trägerkomponente 20 kann bestimmt werden, an welchen Stellen der Schachtwand 18 ein Schienenbügelunterteil 16 befestigt werden soll. Ausgehend von der Forderung, dass die montierten Führungsschienen parallel zu den Referenzelementen 13 und in einem bestimmten Abstand zu ihnen verlaufen müssen, kann eine Position einer Markierung am Schienenbügelunterteil 16 bestimmt werden, die für die Ausrichtung der am Schienenbügelunterteil 16 fixierten Führungsschiene genutzt wird. Auf die Ausrichtung der Führungsschiene wird im Zusammenhang mit den Fig. 3 und 4 genauer eingegangen.

Die Position der Trägerkomponente 20 im Aufzugschacht 10 kann auch mit Hilfe eines digitalen Modells der Aufzuganlage 12 bestimmt werden. Dazu muss der Aufzugschacht 10 beispielsweise mittels eines Laserscanners vermessen werden.

Eines der Montagewerkzeuge 34 ist als Bohrwerkzeug, ähnlich einer Bohrmaschine, ausgestaltet. Durch Kopplung des Industrieroboters 24 mit einem solchen Bohrwerkzeug kann die Installationskomponente 22 dazu ausgestaltet werden, ein zumindest teilweise automatisiert gesteuertes Bohren von Befestigungslöchern in einer der Schachtwände 18 des Aufzugschachts 10 zu ermöglichen. Das Bohrwerkzeug kann hierbei von dem Industrieroboter 24 derart bewegt und gehandhabt werden, dass das Bohrwerkzeug mit einem Bohrer an einer vorgesehenen Position Löcher in die Schachtwand 18 des Aufzugschachts 10 bohrt, in die später Befestigungselemente in Form von Schrauben oder Schraubankern zur Fixierung von Schienenbügelunterteilen eingeschraubt werden.

Ein weiteres Montagewerkzeug 34 ist als Schrauber ausgestaltet, um zumindest teilautomatisch Schraubanker oder Schrauben in zuvor gebohrte Befestigungslöcher in die Schachtwand 18 des Aufzugschachts 10 einzuschrauben.

Ein weiteres Montagewerkzeug 34 ist als ein Greifer ausgestaltet, um zumindest teilautomatisch ein Schienenbügelunterteil 16 an der Schachtwand 18 zu befestigen.

Ein weiteres Montagewerkzeug 34 ist als ein Markierwerkzeug, beispielsweise in Form eines Fräsers ausgeführt, um eine Markierung (68 in Fig. 4) an einem Schienenbügelunterteil 16 anzubringen. Diese Markierung wird für die Ausrichtung der am Schienenbügelunterteil 16 fixierten Führungsschiene genutzt.

An der Trägerkomponente 20 kann ferner eine Magazinkomponente 36 vorgesehen sein. Die Magazinkomponente 36 kann dazu dienen, zu installierende Schienenbügelunterteile 16 zu lagern und der Installationskomponente 22 bereitzustellen. In der Magazinkomponente 36 können auch Schraubanker oder Schrauben gelagert und bereitgestellt werden, die mithilfe der Installationskomponente 22 in vorgefertigte Befestigungslöcher in der Schachtwand 18 eingeschraubt werden können.

Im dargestellten Beispiel kann der Industrieroboter 24 beispielsweise automatisch eine Schraube aus der Magazinkomponente 36 greifen und beispielsweise mit einem als Schrauber ausgebildeten Montagewerkzeug 34 unvollständig in zuvor gebohrte Befestigungslöcher in der Schachtwand 18 einschrauben. Anschliessend kann ein Montagewerkzeug 34 an dem Industrieroboter 24 gewechselt werden und beispielsweise ein Schienenbügelunterteil 16 aus der Magazinkomponente 36 gegriffen werden. Das Schienenbügelunterteil 16 weist Befestigungsschlitze auf. Wenn das Schienenbügelunterteil 16 mithilfe der Installationskomponente 22 in eine vorgesehene Position gebracht wird, können die zuvor teilweise eingeschraubten Schrauben in diese Befestigungsschlitze eingreifen bzw. durch diese hindurch verlaufen. Nachfolgend kann wiederum auf das als Schraubvorrichtung ausgebildete Montagewerkzeug 34 umkonfiguriert werden und die Schrauben festgezogen werden. Die Schienenbügelunterteile 16 können insbesondere wie die in der nicht vorveröffentlichten internationalen Patentanmeldung der Anmelderin mit der Anmeldenummer PCT/EP2016/065244 beschriebenen Aufzugteilehalter ausgeführt sein. Das Befestigen der Schienenbügelunterteile 16 kann insbesondere entsprechend dem in der genannten internationalen Patentanmeldung beschriebenen Verfahren durchgeführt werden.

Nach dem Befestigen bzw. Fixieren eines Schienenbügelunterteils 16 an der Schachtwand 18 des Aufzugschachts 10 kann auf das als Markierungswerkzeug ausgebildete Montagewerkzeug 34 umkonfiguriert werden und eine Markierung in Form von zwei Kreuzen am Schienenbügelunterteil 16 angebracht werden.

Auf diese Weise werden alle Schienenbügelunterteile 16 der Aufzuganlage 12 an den Schachtwänden 18 des Aufzugschachts 10 befestigt und mit Markierungen für die Ausrichtung der Führungsschienen versehen. Sobald alle Schienenbügelunterteile 16 montiert und mit Markierungen versehen sind, werden die Referenzelemente 13 für die Ausrichtung der Führungsschienen nicht mehr benötigt.

Anstatt wie beschrieben die Schienenbügelunterteile mit einer Montagevorrichtung 14 zumindest teilautomatisch an den Schachtwänden 18 des Aufzugschachts zu befestigen und mit einer Markierung zu versehen, kann dies auch von einem Monteur von Hand durchgeführt werden.

Nachdem alle Schienenbügelunterteile 16 an den Aufzugschächten 18 fixiert sind, werden Führungsschienen in den Aufzugschacht 10 gebracht und von einem Monteur an den Schachtwänden 18 fixiert. Dies wird anhand der Fig. 3 und 4 beschrieben.

Zunächst wird eine Führungsschiene 38 provisorisch an einer Schachtwand 18 befestigt. Dazu wird die Führungsschiene 38 über nicht genauer ausgeführte Schienenclips 40 an einem Schienenbügeloberteil 42, welches einen hauptsächlich L-förmigen Querschnitt aufweist, befestigt. Der längere Teil des Schienenbügeloberteils 42 liegt auf einem Schienenbügelunterteil 16 auf, das ebenfalls einen hauptsächlich L-förmigen Querschnitt aufweist. Das Schienenbügelunterteil 16 ist mittels zwei Schrauben 44 an der Schachtwand 18 fixiert. Um die beiden Schienenbügelteile 16, 42 miteinander verbinden zu können, weist das Schienenbügelunterteil 16 zwei Langlöcher 46 auf, die in einer Linie hauptsächlich parallel zur Schachtwand 18 verlaufen. Das Schienenbügeloberteil 42 weist ebenfalls zwei Langlöcher 48 auf, die parallel zueinander senkrecht zur Schachtwand 18 verlaufen. Die Langlöcher 46 und 48 sind so angeordnet, dass jeweils eine Schraube-Mutter-Verbindung 50 durch die Langlöcher 46, 48 durchgeführt werden kann und so die beiden Schienenbügelteile 16, 42 miteinander verbunden werden können. Durch die insgesamt vier Langlöcher 46, 48 kann die relative Lage der beiden Schienenbügelteile 16, 42 zueinander verändert und so die mit dem Schienenbügeloberteil 42 fest verbundene Führungsschiene 38 ausgerichtet werden. Zunächst werden die Schraube-Mutter-Verbindungen 50 nur so fest angezogen, dass die beiden Schienenbügelteile 16, 42 zwar verbunden, aber noch gegeneinander beweglich sind.

Zum Ausrichten der Führungsschiene 38 wird eine Ausrichtvorrichtung 52 verwendet. Die Ausrichtvorrichtung 52 weist ein Anlageteil 54 auf, das über eine Ausnehmung 56 verfügt. Die Ausnehmung 56 hat eine komplementäre Form einer Lauffläche 58 der Führungsschiene 38. Damit kann das Anlageteil 54 wie in den Fig. 3 und 4 dargestellt so an die Führungsschiene 38 angelegt werden, dass die Lauffläche 58 der Führungsschiene 38 durch die Ausnehmung 56 verläuft und ohne Spiel am Rand der Ausnehmung 56 anliegt. In diesem Zustand hat das Anlageteil 54 und damit die Ausrichtvorrichtung 52 eine definierte Position gegenüber der Führungsschiene 38. Damit diese Position sicher beibehalten werden kann, weist die Ausrichtvorrichtung 52 eine nur schematisch dargestellte Klemmvorrichtung 59 auf, mittels welcher die Ausrichtvorrichtung 52 an der Führungsschiene 38 festgeklemmt werden kann.

Am Anlageelement 54 ist eine Peilvorrichtung 60 befestigt, welche einen hautsächlich U-förmigen Querschnitt mit zwei Armen 62 aufweist. Die Arme 62 verlaufen in der dargestellten festgeklemmten Position der Ausrichtvorrichtung 52 hauptsächlich parallel zu den Langlöchern 48 des Schienenbügeloberteils 42, wobei sie über das Schienenbügeloberteil 42 hinausragen. An den in Richtung Schachtwand 18 orientierten Enden der Arme 62 ist jeweils ein Laser 64 so angeordnet, dass er einen Laserstrahl 66 in Richtung Schienenbügelunterteil 16 aussenden kann. Am Schienenbügelunterteil 16 sind zwei Markierungen 68 in Form von Kreuzen angeordnet. Die Markierungen 68 sind so positioniert, dass die Führungsschiene 38 dann korrekt ausgerichtet ist, wenn die Laserstrahlen 66 genau auf die Markierungen 68 ausgerichtet sind. Zum Ausrichten der Führungsschiene 38 muss damit ein Monteur die Position des Schienenbügeloberteils 42 und damit der Führungsschiene 38 gegenüber dem Führungsschienenunterteils 16 so einstellen, dass die Laserstrahlen 66 genau auf die Markierungen 68 treffen. Ist dies der Fall, zieht der Monteur die Schraube-Mutter-Verbindungen 50 so fest an, dass keine Bewegung zwischen den beiden Schienenbügelteilen 16, 42 mehr möglich ist. Die Führungsschiene 38 ist damit fest an der Schachtwand 18 fixiert und ausgerichtet.

Um die Ausrichtvorrichtung 52 an verschiedene Aufzuganlagen anpassen zu können, kann die Peilvorrichtung 60 gegenüber dem Anlageteil 54 in Richtung der beiden Arme 62 verschoben werden. Die Ausrichtvorrichtung 52 weist dazu eine nicht weiter dargestellte Verstelleinrichtung auf.

Eine besonders exakte Ausrichtung von Führungsschienen wird erreicht, wenn gleichzeitig zwei gegenüberliegende Führungsschienen 38 wie beschrieben ausgerichtet und an der jeweiligen Schachtwand 18 fixiert werden. Die korrekte Ausrichtung kann dabei zusätzlich geprüft werden.

Dazu sind die beiden Ausrichtvorrichtungen 52 mit einer Schnur 70 verbunden. Bei korrekter Ausrichtung der beiden gegenüberliegenden Führungsschienen 38 muss die Schnur bei beiden Prüfvorrichtungen 52 exakt über einer langgestreckten Prüfmarkierung in Form einer Nut 72 verlaufen. Dies wird vom Monteur geprüft.

Der Monteur prüft ausserdem mit einer so genannten Spurlehre, einem Stab mit definierter Länge, ob die beiden Führungsschienen den korrekten Abstand zueinander aufweist. Dies ist dann der Fall, wenn die Spurlehre horizontal genau zwischen die beiden gegenüberliegenden Führungsschienen passt.

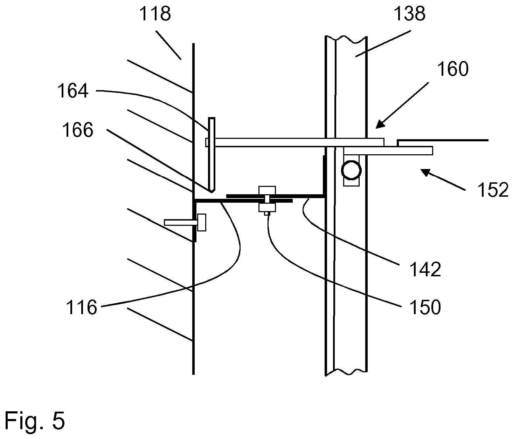

In Fig. 5 ist eine zur Ausrichtvorrichtung 52 in Fig. 3 und 4 alternative Ausrichtvorrichtung 152 dargestellt. Die Ausrichtvorrichtung 152 unterscheidet sich nur wenig von der Ausrichtvorrichtung 52, so dass nur auf die Unterschiede der beiden Ausrichtvorrichtungen eingegangen wird.

Eine Peilvorrichtung 160 der Ausrichtvorrichtung 152 weist zwei Ausrichtstäbe 164 und dafür keine Laser wie die Ausrichtvorrichtung 60 aus Fig. 3 und 4 auf. Zum Ausrichten der Führungsschiene 138 muss damit ein Monteur die Position des Schienenbügeloberteils 142 und damit der Führungsschiene 138 gegenüber dem Führungsschienenunterteils 116 so einstellen, dass Spitzen 166 der Peilstäbe 164 genau auf die Markierungen am Schienenbügelunterteil 116 ausgerichtet sind. Ist dies der Fall, zieht der Monteur die Schraube-Mutter-Verbindungen 150 so fest an, dass keine Bewegung zwischen den beiden Schienenbügelteilen 116, 142 mehr möglich ist. Die Führungsschiene 138 ist damit fest an der Schachtwand 118 fixiert und ausgerichtet.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zur Montage einer Führungsschiene (381, 138) in einem hauptsächlich in einer Haupterstreckungsrichtung (11) verlaufenden Aufzugschacht (10) einer Aufzuganlage (12) mit wenigstens folgenden Schritten
- Fixieren eines Schienenbügelunterteils (16, 116) an einer Schachtwand (18, 118) des Aufzugschachts (10),
- Anbringen einer Markierung (68) am Schienenbügelunterteil (16, 116),
- Ausrichten der Führungsschiene (38, 138) gegenüber der genannten Markierung (68) und
- Fixieren der Führungsschiene (38, 138) über das Schienenbügelunterteil (16, 116) an der Schachtwand (18, 118).

2. Verfahren nach Anspruch 1,
**dadurch gekennzeichnet, dass**
mittels der Markierung (68) zwei voneinander beabstandete Punkte (68) markiert werden.

3. Verfahren nach Anspruch 1 oder 2,
**dadurch gekennzeichnet, dass**
das Ausrichten der Führungsschiene (38, 138) gegenüber der genannten Markierung (68) mittels einer Ausrichtvorrichtung (52, 152) erfolgt, welche über
- ein Anlageteil (54) mit einer Ausnehmung (56), welche eine komplementäre Form einer Lauffläche (58) der Führungsschiene (38, 138) aufweist und
- eine Peilvorrichtung (60, 160), welche so ausgeführt und angeordnet ist, dass das Anlageteil (54) in eine definierte Position gegenüber der Markierung (68) auf der an der Schachtwand (18, 118) des Aufzugschachts (10) fixierten Schienenbügelunterteil (16, 116) gebracht werden kann, verfügt.

4. Verfahren nach einem der Ansprüche 1 bis 3,
**dadurch gekennzeichnet, dass**
eine Position der Markierung (68) auf Basis wenigstens eines im Aufzugschacht (10) angeordneten Referenzelements (13) bestimmt wird.

5. Verfahren nach Anspruch 4,
**dadurch gekennzeichnet, dass**
das Referenzelement (13) in Haupterstreckungsrichtung (11) des Aufzugschachts (10) verläuft.

6. Verfahren nach einem der Ansprüche 1 bis 5,
**dadurch gekennzeichnet, dass**
die Markierung (68) mittels einer mechatronischen Installationskomponente (22) einer Montagevorrichtung (14) zur Durchführung eines Installationsvorgangs in einem Aufzugschacht (10) am Schienenbügelunterteil (16, 116) angebracht wird.

7. Verfahren nach einem der Ansprüche 1 bis 6,
**dadurch gekennzeichnet, dass**
zwei gegenüberliegende Führungsschienen (38, 138) jeweils gegenüber der Markierung (68) am der jeweiligen Führungsschiene (38, 138) zugeordneten Schienenbügelunterteil (16, 116) ausgerichtet werden.

8. Verfahren nach Anspruch 7,
**dadurch gekennzeichnet, dass**
das Ausrichten der Führungsschienen (38, 138) gegenüber der Markierung (68) des der jeweiligen Führungsschiene (38, 138) zugeordneten Schienenbügelunterteils (16, 116) mittels jeweils einer Ausrichtvorrichtung (52, 152) erfolgt, welche mittels einer Schnur (70) verbunden sind und ein korrekter Verlauf der genannten Schnur (70) geprüft wird.

9. Verfahren nach Anspruch 7 oder 8,
**dadurch gekennzeichnet, dass**
ein Abstand der beiden gegenüberliegenden Führungsschienen (38, 138) überprüft wird.

10. Ausrichtvorrichtung (52, 152) zur Ausrichtung einer Führungsschiene (38, 138) in einem hauptsächlich in einer Haupterstreckungsrichtung (11) verlaufenden Aufzugschacht (10) einer Aufzuganlage (12), welche dazu eingerichtet ist, die Führungsschiene (38, 138) gegenüber einer Markierung (68) an einem an einer Schachtwand (18, 118) des Aufzugschachts (10) fixierten Schienenbügelunterteil (16, 116) auszurichten.

11. Ausrichtvorrichtung nach Anspruch 10,
**gekennzeichnet durch**
- ein Anlageteil (54) mit einer Ausnehmung (56), welche eine komplementäre Form einer Lauffläche (58) der Führungsschiene (38, 138) aufweist und
- einer Peilvorrichtung (60, 160), welche so ausgeführt und angeordnet ist, dass das Anlageteil (54) in eine definierte Position gegenüber der Markierung (68) am Schienenbügelunterteil (16, 116) gebracht werden kann.

12. Ausrichtvorrichtung nach Anspruch 11,
**dadurch gekennzeichnet, dass**
die Peilvorrichtung (60) wenigstens einen Laser (64) aufweist.

13. Ausrichtvorrichtung nach Anspruch 11,
**dadurch gekennzeichnet, dass**
die Peilvorrichtung (160) wenigstens einen Peilstab (164) aufweist.

14. Ausrichtvorrichtung nach Anspruch 12 oder 13,
**dadurch gekennzeichnet, dass**
die Anordnung des Anlageteils (54) bezüglich der Peilvorrichtung (60, 160) einstellbar ist.

15. Ausrichtvorrichtung nach Anspruch 12, 13 oder 14,
**gekennzeichnet durch**
eine langgestreckte Prüfmarkierung (72), welche so ausgeführt ist, dass ein korrekter Verlauf einer an der Ausrichtvorrichtung (52, 152) befestigten Schnur (70) geprüft werden kann.

## Claims

1. Method for mounting a guide rail (381, 138) in an elevator shaft (10) of an elevator system (12), which elevator shaft primarily extends in a main extension direction (11), comprising at least the following steps
- securing a rail bracket base (16, 116) to a shaft wall (18, 118) of the elevator shaft (10),
- applying a mark (68) to the rail bracket base (16, 116),
- aligning the guide rail (38, 138) in relation to said mark (68) and
- securing the guide rail (38, 138) to the shaft wall (18, 118) via the rail bracket base (16, 116).

2. Method according to claim 1,
**characterized in that**
two mutually spaced points (68) are marked by means of the mark (68).

3. Method according to either claim 1 or claim 2,
**characterized in that**
the guide rail (38, 138) is aligned in relation to said mark (68) by means of an alignment device (52, 152), which comprises
- an abutment part (54) having a recess (56), which has a complementary shape to a running surface (58) of the guide rail (38, 138), and
- a location device (60, 160), which is designed and arranged such that the abutment part (54) can be brought into a defined position in relation to the mark (68) on the rail bracket base (16, 116) secured to the shaft wall (18, 118) of the elevator shaft (10).

4. Method according to any of claims 1 to 3,
**characterized in that**
a position of the mark (68) is determined on the basis of at least one reference element (13) arranged in the elevator shaft (10).

5. Method according to claim 4,
**characterized in that**
the reference element (13) extends in the main extension direction (11) of the elevator shaft (10).

6. Method according to any of claims 1 to 5,
**characterized in that**
the mark (68) is applied to the rail bracket base (16, 116) by means of a mechatronic installation component (22) of a mounting device (14) for carrying out an installation process in an elevator shaft (10).

7. Method according to any of claims 1 to 6,
**characterized in that**
two opposing guide rails (38, 138) are each aligned in relation to the mark (68) on the rail bracket base (16, 116) associated with each guide rail (38, 138).

8. Method according to claim 7,
**characterized in that**
the guide rails (38, 138) are aligned in relation to the mark (68) of the rail bracket base (16, 116) associated with each guide rail (38, 138) by means of an alignment device (52, 152) in each case, which devices are connected by means of a cord (70) and a correct course of said cord (70).

9. Method according to either claim 7 or claim 8,
**characterized in that**
the spacing between the two opposing guide rails (38, 138) is checked.

10. Alignment device for aligning a guide rail (38, 138) in an elevator shaft (10) of an elevator system (12), which elevator shaft primarily extends in a main extension direction (11), which device is configured to align the guide rail (38, 138) in relation to a mark (68) on a rail bracket base (16, 116) secured to a shaft wall (18, 118) of the elevator shaft (10).

11. Alignment device according to claim 10,
**characterized by**
- an abutment part (54) having a recess (56), which has a complementary shape to a running surface (58) of the guide rail (38, 138), and
- a location device (60, 160), which is designed and arranged such that the abutment part (54) can be brought into a defined position in relation to the mark (68) on the rail bracket base (16, 116).

12. Alignment device according to claim 11,
**characterized in that**
the location device (60) comprises at least one laser (64).

13. Alignment device according to claim 11,
**characterized in that**
the location device (160) comprises at least one locating rod (164).

14. Alignment device according to either claim 12 or claim 13,
**characterized in that**
the arrangement of the abutment part (54) can be adjusted with respect to the location device (60, 160).

15. Alignment device according to claim 12, claim 13 or claim 14,
**characterized by**
an elongate verification mark (72), which is designed such that a correct course of a cord (70) fastened to the alignment device (52, 152) can be checked.

## Revendications

1. Procédé de montage d'un rail de guidage (381, 138) dans une cage d'ascenseur (10) d'un système d'ascenseur (12) s'étendant principalement dans une direction longitudinale principale (11), comportant au moins les étapes suivantes
- fixation d'une partie inférieure d'étrier de rail (16, 116) à une paroi de cage (18, 118) de la cage d'ascenseur (10),
- application d'un repère (68) sur la partie inférieure d'étrier de rail (16, 116),
- alignement du rail de guidage (38, 138) par rapport audit repère (68) et
- fixation du rail de guidage (38, 138) à la paroi de cage (18, 118) par l'intermédiaire de la partie inférieure d'étrier de rail (16, 116).

2. Procédé selon la revendication 1,
**caractérisé en ce que**
deux points (68) espacés l'un de l'autre sont marqués au moyen du repère (68).

3. Procédé selon la revendication 1 ou 2,
**caractérisé en ce que**
l'alignement du rail de guidage (38, 138) par rapport audit repère (68) s'effectue au moyen d'un dispositif d'alignement (52, 152) qui comprend
- une partie d'appui (54) comportant un évidement (56), lequel présente une forme complémentaire d'une surface de roulement (58) du rail de guidage (38, 138) et
- un dispositif de radiogoniométrie (60, 160) qui est conçu et agencé de telle manière que la partie d'appui (54) peut être amenée dans une position définie par rapport au repère (68) sur la partie inférieure d'étrier de rail (16, 116) fixée à la paroi de cage (18, 118) de la cage d'ascenseur (10).

4. Procédé selon l'une des revendications 1 à 3,
**caractérisé en ce que**
une position du repère (68) est déterminée sur la base d'au moins un élément de référence (13) disposé dans la cage d'ascenseur (10).

5. Procédé selon la revendication 4,
**caractérisé en ce que**
l'élément de référence (13) s'étend dans une direction longitudinale principale (11) de la cage d'ascenseur (10).

6. Procédé selon l'une des revendications 1 à 5,
**caractérisé en ce que**
le repère (68) est appliqué sur la partie inférieure d'étrier de rail (16, 116) au moyen d'un composant d'installation mécatronique (22) d'un dispositif de montage (14) pour la réalisation d'une opération d'installation dans une cage d'ascenseur (10).

7. Procédé selon l'une des revendications 1 à 6,
**caractérisé en ce que**
deux rails de guidage (38, 138) opposés sont alignés respectivement par rapport au repère (68) sur la partie inférieure d'étrier de rail (16, 116) associée au rail de guidage (38, 138) respectif.

8. Procédé selon la revendication 7,
**caractérisé en ce que**
l'alignement des rails de guidage (38, 138) par rapport au repère (68) de la partie inférieure d'étrier de rail (16, 116) associée au rail de guidage (38, 138) respectif s'effectue au moyen de respectivement un dispositif d'alignement (52, 152) reliés au moyen d'un cordon (70), et un parcours correct dudit cordon (70) est contrôlé.

9. Procédé selon la revendication 7 ou 8,
**caractérisé en ce que**
une distance entre les deux rails de guidage (38, 138) opposés est contrôlée.

10. Dispositif d'alignement (52, 152) permettant d'aligner un rail de guidage (38, 138) dans une cage d'ascenseur (10) d'un système d'ascenseur (12) s'étendant principalement dans une direction longitudinale principale (11), lequel dispositif d'alignement est configuré pour aligner le rail de guidage (38, 138) par rapport à un repère (68) sur une partie inférieure d'étrier de rail (16, 116) fixée sur une paroi de cage (18, 118) de la cage d'ascenseur (10).

11. Dispositif d'alignement selon la revendication 10,
**caractérisé par**
- une partie d'appui (54) comportant un évidement (56), lequel présente une forme complémentaire d'une surface de roulement (58) du rail de guidage (38, 138) et
- un dispositif de radiogoniométrie (60, 160) qui est conçu et agencé de telle manière que la partie d'appui (54) peut être amenée dans une position définie par rapport au repère (68) sur la partie inférieure d'étrier de rail (16, 116).

12. Dispositif d'alignement selon la revendication 11,
**caractérisé en ce que**
le dispositif de radiogoniométrie (60) présente au moins un laser (64).

13. Dispositif d'alignement selon la revendication 11,
**caractérisé en ce que**
le dispositif de radiogoniométrie (160) présente au moins une jauge (164).

14. Dispositif d'alignement selon la revendication 12 ou 13,
**caractérisé en ce que**
la disposition de la partie d'appui (54) par rapport au dispositif de radiogoniométrie (60, 160) est réglable.

15. Dispositif d'alignement selon la revendication 12, 13 ou 14,
**caractérisé par**
un repère de contrôle (72) allongé, lequel est réalisé de telle sorte qu'un parcours correct d'un cordon (70) fixé au dispositif d'alignement (52, 152) peut être contrôlé.
